# EUROPEAN PATENT SPECIFICATION

(11) **EP 3 360 901 B1**
(45) Date of publication and mention of the grant of the patent: **02.12.2026**
(21) Application number: 16853628.2
(22) Date of filing: 05.10.2016
(51) Int. Cl.: C08B 3/06, C08B 3/24, C08B 3/28

(54) **CELLULOSE ACETATE, AND METHOD AND DEVICE FOR PRODUCING CELLULOSE ACETATE**
CELLULOSEACETAT SOWIE VERFAHREN UND VORRICHTUNG ZUR HERSTELLUNG VON CELLULOSEACETAT
ACÉTATE DE CELLULOSE ET PROCÉDÉ ET DISPOSITIF DE PRODUCTION D'ACÉTATE DE CELLULOSE

(30) Priority: 08.10.2015 JP 2015200404
(43) Date of publication of application: 15.08.2018
(73) Proprietor: Daicel Corporation, Osaka-shi, Osaka 530-0011 (JP)
(72) Inventor: KUWANA, Akihiro, Hyogo 671-1283 (JP); TAMAGAKI, Hiroaki, Hyogo 671-1283 (JP)
(74) Representative: Grünecker Patent- und Rechtsanwälte PartG mbB
(86) International application number: PCT/JP2016/079635
(87) International publication number: WO 2017/061474

(56) References cited:
- EP-A1- 0 626 391
- EP-A1- 0 952 160
- EP-A1- 2 075 261
- EP-A2- 0 590 401
- WO-A1-2007/072643
- WO-A1-2010/023707
- JP-A- 2003 252 901
- JP-A- 2003 268 001
- JP-A- 2005 008 827
- JP-A- 2005 082 744
- JP-A- 2005 281 645
- JP-A- 2006 117 896
- JP-A- 2006 213 778
- JP-A- 2006 328 298
- JP-A- 2007 084 718
- JP-A- 2008 127 535
- JP-A- 2008 201 902
- JP-A- 2009 161 701
- JP-A- 2010 202 793
- JP-A- 2010 254 798
- JP-A- 2013 049 867
- JP-A- 2013 151 691
- JP-A- H0 977 801
- JP-A- H06 157 602
- JP-A- H08 319 301
- JP-A- H10 130 301
- US-A- 1 623 519
- US-A1- 2010 175 691
- CELLULOSE SOCIETY (EDS.): "Passage; CELLULOSE NO JITEN", CELLULOSE NO JITEN, 10 November 2000 (2000-11-10), JAPAN, pages 476 - 477, XP009510259, ISBN: 978-4-254-47044-4

## Description

### Technical Field

The present invention relates to a cellulose acetate, and a method and a device for producing a cellulose acetate.

### Background Art

A cellulose acetate is one organic acid ester of cellulose. The use thereof is spreading to various articles, such as fibers for clothing, cigarette filter chips, plastics, films, and paints. Among cellulose derivatives, the acetate is the largest in production quantity to be industrially important.

A typical industrial method for producing a cellulose acetate is the so-called acetic acid method, which makes use of acetic anhydride as an acetylating agent, acetic acid as a diluting agent, and sulfuric acid as a catalyst. A basic process of the acetic acid method includes a pretreating step (1) of disintegrating and crushing a pulp material relatively high in α-cellulose content by proportion (dissolved pulp), and then spraying and blending acetic acid onto/into the resultant, an acetylating step (2) of causing the pretreated pulp in the step (1) to react with a mixed acid composed of acetic anhydride, acetic acid and an acetylating catalyst (such as sulfuric acid), a ripening step (3) of hydrolyzing the resultant cellulose acetate to prepare a cellulose acetate having a desired acetylation degree, and a post-treating step (4) of precipitating/separating the cellulose acetate, the hydrolysis reaction of which has been ended, from the reaction solution, and then purifying, stabilizing, and drying the separated cellulose acetate.

Besides this basic process, Patent Literatures 1 to 7 disclose plural methods for producing a cellulose acetate.

### Citation List

### Patent Literatures

PTL 1: U.S. Patent No. 3767642
PTL 2: JP S56-059801 A
PTL 3: JP S62-000501 A
PTL 4: JP H04-065401 A
PTL 5: JP H05-239101 A
PTL 6: JP H02-103201 A
PTL 7: JP H06-157601 A

EP0952160A1 also relates to cellulose acetate.

### Summary of Invention

### Technical Problem

A raw material that has been hitherto used to produce a cellulose acetate is a high-quality pulp (dissolved pulp), in which the content by proportion of α-cellulose is high. However, from the viewpoint of a global restriction of resources and pollution problems of pulp producing factories, it is anticipated that pulps having a high quality matching with costs do not easily come to be gained. When a low-quality pulp, in which the α-cellulose content by proportion is low, is used as a raw material, a cellulose acetate yielded by any conventional producing method contains therein a coloring component not to have a sufficient hue since the low-quality pulp, in which the α-cellulose content by proportion is low, is higher in hemicellulose content by proportion than the high-quality pulp.

An object of the present invention is to provide a cellulose acetate remarkably good in hue even when a low-quality pulp is used.

### Solution to Problem

The present invention concerns cellulose acetates according to claims 1 to 3. Further, the present invention concerns a method for producing cellulose acetate according to claim 4. Preferred embodiments of the method are defined in claims 5 to 8. Further, the present invention concerns a device for producing cellulose acetate according to claim 9. A preferred embodiment of the device is defined in claim 10.

### Advantageous Effects of Invention

The present invention makes it possible to provide a cellulose acetate remarkably good in hue even when a low-quality pulp is used.

### Brief Description of Drawings

Fig. 1 is a schematic view illustrating an embodiment of a device for producing a cellulose acetate.
Fig. 2 is a schematic view illustrating an embodiment of the device for producing a cellulose acetate.

### Description of Embodiments

A low-quality pulp, in which the α-cellulose content by proportion is low, includes xylose which is a hemicellulose component, and is partially oxidized at a high temperature to be turned to furfural, hydroxymethylfurfural, and 5-formyl-2-furancarboxylic acid (FFA), and others, which are derived from xylan. The inventors have found out that these components, which are derived from xylan, are further oxidized by oxygen at a high temperature to deteriorate the hue of a cellulose acetate itself, and that, in particular, in the ripening step, in which the cellulose acetate is exposed to high temperature, the oxygen concentration is decreased, thereby yielding a cellulose acetate remarkably good in hue. Thus, the present invention has been accomplished.

Cellulose acetates according to the present disclosure are different from each other in absorptiometry hue in accordance with the proportion of the content by mole of xylose in the sum of the respective contents by mole of xylose, mannose, and glucose, which constitute the cellulose acetate. Thus, the cellulose acetates will be described to be distinguished from each other hereinafter.

One of the cellulose acetates according to the present disclosure is a cellulose acetate in which the proportion of the content by mole of xylose is more than 0.5% by mole and 1.0% or less by mole in the sum of the respective contents by mole of xylose, mannose, and glucose, and about which at a wavelength of 430 nm, an absorptiometry hue less than 0.60 cm⁻¹ is shown. In this case, the lower limit value of the absorptiometry hue is not particularly limited, and may be 0.20 cm⁻¹ or more.

When the proportion of the content by mole of xylose is more than 0.7% by mole and 0.9% or less by mole, the absorptiometry hue at a wavelength of 430 nm may be 0.50 cm⁻¹ or more and less than 0.55 cm⁻¹. When the proportion of the content by mole of xylose is more than 0.9% by mole and 1.0% or less by mole, the absorptiometry hue at a wavelength of 430 nm may be 0.55 cm⁻¹ or more and less than 0.60 cm⁻¹.

Another ofthe cellulose acetates according to the present disclosure is a cellulose acetate in which the proportion of the content by mole of xylose is more than 1.0% by mole and 5.0% or less by mole in the sum of the respective contents by mole of xylose, mannose, and glucose, and about which at a wavelength of 430 nm, an absorptiometry hue of 0.60 cm⁻¹ or more and less than 0.80 cm⁻¹ is shown.

When the proportion of the content by mole of xylose is more than 1.0% by mole and 1.5% or less by mole, the absorptiometry hue at a wavelength of 430 nm may be 0.60 cm⁻¹ or more and less than 0.70 cm⁻¹. When the proportion of the content by mole of xylose is more than 1.5% by mole and 2.5% or less by mole, the absorptiometry hue at a wavelength of 430 nm may be 0.70 cm⁻¹ or more and less than 0.75 cm⁻¹.

Still another of the cellulose acetates according to the present disclosure is a cellulose acetate in which the proportion of the content by mole of xylose is more than 5.0% by mole and 7.0% or less by mole in the sum of the respective contents by mole of xylose, mannose, and glucose, and about which at a wavelength of 430 nm, an absorptiometry hue of 0.80 cm⁻¹ or more and less than 1.8 cm⁻¹ is shown.

When the proportion of the content by mole of xylose is more than 5.5% by mole and 7.0% or less by mole, the absorptiometry hue at a wavelength of 430 nm may be 1.5 cm⁻¹ or more and less than 1.8 cm⁻¹.

As described above, about the cellulose acetates in the present disclosure, a coloring component generated by the decomposition of their hemicellulose component is small in quantity so that the cellulose acetates have a remarkably good in hue, although the proportion of the content by mole of xylose, which is the hemicellulose component, is relatively high.

### (Xylose)

As saccharides constituting each of the cellulose acetates according to the present disclosure, xylose, mannose, and glucose are present. The proportion of the content by mole of xylose in the sum of the respective contents by mole of xylose, mannose, and glucose can be gained by the following method:

A cellulose sample is caused to undergo a hydrolysis step, a neutralizing step with sodium hydroxide, and a filtrating step through a filter, and then a product HPLC (LC-20A system) is used to calculate out, from the resultant data, not only the proportion of xylose but also the respective proportions of the other constituting saccharides, and therefrom the content by mole of xylose can be gained.

### (Absorptiometry Hue)

The absorptiometry hue of each of the cellulose acetates according to the present disclosure at a wavelength of 430 nm can be gained by the following method: As a sample, a cellulose acetate solution in DMSO is prepared which has an already known concentration. The absorbance thereof at a wavelength λ of 430 nm and the absorbance thereof at a wavelength of 740 nm are each measured. A difference in absorbance therebetween is gained. Furthermore, under the conversion of the cellulose acetate concentration to 100%, the resultant value is the absorptiometry hue of the sample. The absorptiometry hue is a value as shown by the following equation. 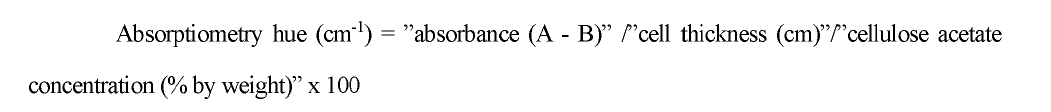Absorptiometry hue (cm-1) = "absorbance (A - B)" /"cell thickness (cm)"/"cellulose acetate concentration (% by weight)" x 100

Absorbance: one according to a spectrophotometer UV-1700 manufactured by Shimadzu Corporation.
A: absorbance at 430 nm (the yellowness of the liquid is measured)
B: absorbance at 740 nm (base line; the turbidity of the liquid is measured) 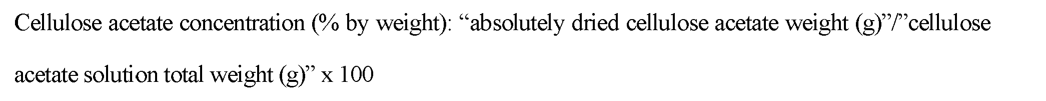
Cellulose acetate concentration (% by weight): "absolutely dried cellulose acetate weight (g)"/"cellulose acetate solution total weight (g)" x 100 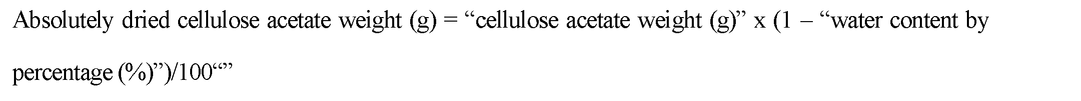 Absolutely dried cellulose acetate weight (g) = "cellulose acetate weight (g)" x (1 - "water content by percentage (%)")/100"" Water content by percentage (%): infrared aquameter METTLER TOLEDO HB43

### (Calcium Content and Magnesium Content)

A large proportion of each of calcium and magnesium contained in each of the cellulose acetates according to the present disclosure originates from a neutralizing agent, a stabilizer or washing water used to produce the cellulose acetate. Calcium or magnesium is caused to be present by an adhesion thereof onto a flake surface of the cellulose acetate, or by electrostatic interaction thereof with carboxyl groups contained in a fiber of the cellulose, or with moieties of a sulfuric acid ester that are formed at the time of the production.

In each of the cellulose acetates according to the present disclosure, the calcium content is preferably from 40 ppm to 80 ppm both inclusive, more preferably from 45 ppm to 75 ppm both inclusive, even more preferably from 45 ppm to 70 ppm both inclusive, most preferably from 60 ppm to 70 ppm both inclusive. If the calcium content is too small, the cellulose acetate tends to be deteriorated in heat resistance. If the content is too large, the cellulose acetate tends to be deteriorated in hue.

In each of the cellulose acetates according to the present disclosure, the upper limit value of the magnesium content is 5 ppm or less, preferably 4 ppm or less, even more preferably 3 ppm or less. The lower limit value of the magnesium content is preferably 1 ppm or more, more preferably 2 ppm or more. If the magnesium content is too small, the cellulose acetate tends to be deteriorated in heat resistance. If the content is too large, the cellulose acetate tends to be deteriorated in hue.

The calcium content in the cellulose acetate, and the magnesium content therein are each measurable by the following methods:

An undried sample is weighed into 3.0 g in a crucible. The sample is carbonized on an electric heater, and then incinerated in an electric furnace of 750°C to 850°C temperature for 2 hours. The sample is naturally cooled for about 30 minutes, and then thereto is added 25 mL of a 0.07% hydrochloric acid solution. The sample is then heated at 220°C to 230°C to be dissolved. After the natural cooling, distilled water is used to increase the volume of the dissolved liquid up to 200 mL. This is used as an inspecting liquid. An atomic absorption spectrophotometer is used to measure the absorbance of this inspecting liquid together with that of a standard liquid to gain the calcium (Ca) content in the inspecting liquid or the magnesium (Mg) content therein. In accordance with an equation described below, a conversion is made to be able to gain the calcium (Ca) content in the sample or the magnesium (Mg) content therein. The water content in the sample is measurable using, for example, a Kett moisture meter (METTLER TOLEDO HB43). Onto an aluminum receiver of the Kett moisture meter, about 2.0 g of the sample which is in a water-contained state, is put. The sample is heated at 120°C until the weight does not come to be changed. From a change in the weight before and after the heating, the water content (% by weight) in the sample can be calculated. [Math. 1] $\begin{matrix}" Ca or Mg content \left(ppm\right) in \\ sample "\end{matrix} = \frac{" Ca or Mg content \left(ppm\right) in inspecting liquid " \times 200}{" Sample weight \left(g\right) " \times \left(1-"water content \left(\begin{matrix}% by \\ weight\end{matrix}\right)"/100\right)}$

### (6% Viscosity)

About each of the cellulose acetates according to the present disclosure, the 6% viscosity thereof is preferably 60 mPa•s or more, more preferably 80 mPa•s or more, even more preferably 90 mPa•s or more. The upper limit value thereof may be 160 mPa•s or less, 130 mPa•s or less, or 100 mPa•s or less.

If the 6% viscosity is less than 60 mPa•s, the cellulose acetate becomes also too small in molecular weight. Thus, when the cellulose acetate is made into a shaped body, mechanical strengths thereof (particularly, the brittleness thereof) are poor. If the 6% viscosity is more than 160 mPa•s, the following problem is caused in a process for producing the cellulose acetate: when a mixed liquid containing the cellulose acetate is sent through a line to a precipitating tank, the line is easily stopped up with the cellulose acetate. Consequently, the production efficiency of the cellulose acetate is unfavorably lowered. Furthermore, in the shaping step of making the resultant cellulose acetate into a shaped body such as a fiber or a film, the following is caused at the time of preparing a solution in which the cellulose acetate is dissolved in a solvent such as methylene chloride or acetone (that is, a dope): the filter is easily stopped up with this solution (dope), so that the production efficiency of such shaped bodies may be lowered.

The 6% viscosity is a value obtained by measuring a 6-wt/vol%-solution in which 3.00 g of a dry sample is dissolved in 39.90 g of a 95% solution of acetone in water, using an Ostwald viscometer.

### (Filtration Degree)

According to a method or a device for producing the cellulose acetate, that will be detailed later, a hemicellulose component contained in a pulp which is a raw material is not easily decomposed. Consequently, a cellulose acetate can be yielded with a remarkably good filtration property. About each of the cellulose acetates according to the present invention, the filtration degree KW can be 400 mL⁻¹, and is more preferably 200 mL⁻¹, even more preferably 100 mL⁻¹. For example, in a case where each of the cellulose acetates in the present disclosure is spun, the setting of the filtration degree KW into any one of these ranges favorably decreases the frequency of breaking of the resultant fiber in the step of the spinning.

The filtration degree is measurable by the following method: A cellulose acetate solution in which a cellulose acetate is dissolved into a 95% acetone solution in water to give a concentration of 20% by weight is passed at 30°C under a constant pressure (2 kgf/cm²) through a predetermined filter cloth shirting (diameter: 15 mm, and filtrating area: 1.77 cm²). At this time, measurements are made about the filtration quantity as P₁ (mL) till a time of 20 minutes after the start of the filtration, and the filtration quantity as P₂ (mL) from the 20 minutes to 60 minutes thereafter. The filtration degree KW (mL⁻¹) is then calculated out in the following equation: $KW = \left[\left(2-{P}_{2}/{P}_{1}\right)/\left({P}_{1}+{P}_{2}\right)\right] \times {10}^{4}$ The filtration degree KW shows the degree of the amount of insoluble components in the above-mentioned cellulose acetate solution. Thus, this degree is an index of the filtration property. According to this equation, it is demonstrated that as the KW value is smaller, the insoluble component amount in the solution is smaller so that the cellulose acetate is better in filtration property.

### (Acetylation Degree)

About each of the cellulose acetates according to the present disclosure, the acetylation degree is in a range preferably from 51% to 62% both inclusive, more preferably from 51% to 58% both inclusive, even more preferably from 54% to 58% both inclusive. The acetylation degree is adjustable by the retention period. The retention period denotes a period from the end of temperature-raising in the ripening step to the finish of hydrolysis reaction therein. As the retention period is longer, the hue tends to be worse.

When the acetylation degree is set into any one of the above-mentioned ranges, the acetylation degree is adjustable to any value, in the step of hydrolyzing a cellulose acetate in a cellulose acetate producing method which will be detailed later in the present disclosure, by adjusting the hydrolysis temperature and the hydrolysis period in an already known manner, for example, in a manner described in "Fibrous Resin (written by Kazuo Utada, and Hiroshi Marusawa, and published by the Nikkan Kogyo Shimbun, Ltd.)" in the case of a cellulose ester such as a cellulose acetate.

The acetylation degree means the percentage by weight of bonded acetic acid in a cellulose per unit weigh of the cellulose. The acetylation degree is according to measurement and calculation of acetylation degree in ASTM-D-817-91 (Test Methods for Cellulose Acetate and Others). Specifically, the acetylation degree can be gained as follows: A dry cellulose acetate is precisely weighed into 1.9 g. The cellulose acetate is dissolved into 150 mL of a mixed solution of acetone and dimethylsulfoxide (ratio by volume: 4/1). Thereto is then added 30 mL of an aqueous 1 N solution of sodium hydroxide to saponify the solution at 25°C for 2 hours. Phenolphthalein is added thereto as an indicator, and then a 1 N sulfuric acid (concentration factor: F) is used to titrate an excessive amount of sodium hydroxide. Moreover, a blank test is made in the same manner as described above, and the acetylation degree of the cellulose acetate is calculated out in accordance with the following equation: $Acetylation degree \left(%\right) = \left[6.5\times \left(B-A\right)\times F\right] / W$ wherein A represents the titration volume (mL) of the 1 N sulfuric acid for the sample; B represents the titration volume (mL) of the 1 N sulfuric acid in the blank test; F represents the concentration factor of the 1 N sulfuric acid; and W represents the weight of the sample.

### [Cellulose Acetate Production]

A detailed description will be made about a method for producing the cellulose acetate in the present disclosure. The method includes a step (1) of crushing a wood pulp, a step (2) of bringing the crushed wood pulp into contact with acetic acid to subject the pulp to pretreat the wood pulp, a step (3) of causing the wood pulp to react with acetic anhydride after the pretreatment to acetylate the pulp, a step (4) of hydrolyzing the cellulose acetate, which is yielded by the acetylation, and a step (5) of precipitating the cellulose acetate, an acetylation degree of which is adjusted by the hydrolysis, wherein in the hydrolyzing step (4), in a hydrolysis reaction system, a concentration of oxygen is set to 3% or less. Each of the cellulose acetates in the present disclosure can be produced by this producing method. About an ordinary method for producing a cellulose acetate, the following may be referred to: "Wood Chemistry" (upper volume) (Migita et al., published by Kyoritsu Shuppan Co., Ltd., in 1968 pp. 180 to 190).

### (Wood Pulp)

A cellulose material which is a raw material of each of the cellulose acetates in the present disclosure may be a low-quality wood pulp, or any other material including xylose which is a hemicellulose. In the present description, pulp or cellulose means a material including hemicellulose or any other component other than cellulose.

Examples of the wood pulp include needle-leaved tree pulps, and broad-leaved tree pulps. Examples of the wood pulp include needle-leaved tree pulps yielded from spruce tree, pine tree, and Japanese boxwood. Examples of the broad-leaved tree pulps include broad-leaved tree pulps yielded from Eucalyptus, Acacia, and others, respectively. These pulps may be used singly or in any combination of two or more thereof. For example, a needle-leaved tree pulp may be used together with a broad-leaved tree pulp.

Even when the content by proportion of α-cellulose in the wood pulp is low, the method for producing the cellulose acetate in the present disclosure makes it possible to improve the cellulose acetate in absorptiometry hue; however, the content is preferably 85% or more by weight, more preferably 90% or more by weight, even more preferably 95% or more by weight, most preferably 100% by weight. When the α-cellulose content by proportion is in any one of the ranges, a cellulose acetate having an absorptiometry hue less than 1.8 cm⁻¹ is easily obtained.

The α-cellulose content by proportion can be obtained as described below. A pulp having an already known weight is continuously extracted with an aqueous 17.5% solution of sodium hydroxide and an aqueous 9.45% solution thereof at 25°C. A soluble fraction of the extracted liquid is oxidized with potassium dichromate. From a volume of potassium dichromate which is required for the oxidization, the weight of β,γ-cellulose is determined. A value obtained by subtracting the β,γ-cellulose weight from the initial weight of the pulp is defined as the weight of an insoluble fraction of the pulp, the weight of α-cellulose (TAPPI T203). The proportion of the weight of an insoluble fraction of the pulp in the initial weight of the pulp is the content by proportion (% by weight) of α-cellulose.

The wood pulp may be a sheet-form pulp. In this case, the sheet is preferably a sheet about which the weight per unit area is 300 g/m² to 850 g/m² both inclusive, the density is 0.40 g/m² to 0.60 g/cm³ both inclusive, and the burst strength is 50 KPa to 1000 KPa both inclusive. However, the wood pulp is not limited to such pulps.

### (Crushing)

The cellulose acetate producing method in the present disclosure has the step of crushing the wood pulp. According to this step, reactions in subsequent steps advance effectively and evenly and the handling of the pulp also becomes easy. The crushing step is effective, particularly, for a case where the wood pulp is supplied in a sheet-form.

In the step (1) of crushing the wood pulp, a method for crushing the wood pulp is classified into a wet crushing method and a dry crushing method. The wet crushing method is a method of adding, for example, water or water vapor to a wood pulp such as a pulp sheet to crush the pulp. Examples of the wet crushing method include a method of performing the activation of the pulp by water vapor, and a strong shear stirring thereof in a reactor; and the so-called slurry-pretreatment-performing method of dissociating the pulp in a dilute solution of acetic acid in water to prepare a slurry, and then repeating liquid-removal and acetic-acid substitution. The dry crushing method is a method of crushing a wood pulp such as a pulp sheet in a dry state. Examples of the dry crushing method include a method of crushing a pulp crushed roughly by a disc refiner having pyramid teeth by a disc refiner having linear teeth; a method of using a turbo mill, the mill having a cylindrical external box having an inner wall to which a liner is fitted, plural discs which rotate at a high speed around a central line of the external box, and many fans each located between any two of the discs and fitted in radial directions from the central line, to crush a matter to be crushed that is supplied into the external box by three impact effects. These effects are hitting by the fans; collision onto the liner; and high-frequency pressure vibrations generated by the effect of three species of the discs which are rotating at a high speed, the fans, and the liner.

In the method for producing the cellulose acetate in the present disclosure, any one of these crushing methods is appropriately usable. A method of using a disc refiner and a turbo mill in turn to crush the pulp at two stages is particularly preferred since the filtration degree of the resultant cellulose acetate is improved. According to ordinary techniques, a bulky pulp-sheet-crushed product obtained by the crushing is air-transported. In the producing method in the present disclosure, not air but an inert gas may be used for the transportation of this pulp-sheet-crushed product. The pulp-crushed product is bulky. Thus, when air-transported, the crushed product comes to contain a large volume of air. However, the transportation through the inert gas makes the crushed product into an oxygen-free state. In this way, the oxygen concentration is made low in subsequent steps to be easily set to 3% or less.

### (Pretreatment)

In the step (2) of bringing the crushed pulp and acetic acid into contact with each other to pretreat the pulp, acetic acid is added to the wood pulp in an amount ranging preferably, for example, from 10 to 500 parts both inclusive by weight for 100 parts by weight of the wood pulp, so that the contact can be attained. At this time, acetic acid may be a 99%-by-weight acetic acid product.

Examples of the method for bringing the wood pulp and acetic acid into contact with each other include a method of adding, to the pulp, acetic acid or acetic acid containing 1 to 10% by weight of sulfuric acid (sulfuric-acid-containing acetic acid) at one stage; and a method of attaining the addition of acetic acid or sulfuric-acid-containing acetic acid at stages divided into two or more, such as a method of adding thereto acetic acid, and adding thereto sulfuric-acid-containing acetic acid after a predetermined period elapses, or a method of adding thereto sulfuric-acid-containing acetic acid, and adding thereto acetic acid after a predetermined period elapses. A specific means for the addition may be a means of spraying the acid to be mixed with the pulp.

The activation by pretreatment may be conducted, for example, by the following: adding acetic acid and/or sulfuric-acid-containing acetic acid to the pulp; and subsequently allowing the system to stand still at a temperature of 17 to 40°C both inclusive for 0.2 to 48 hours both inclusive, or subsequently closing the system airtightly and stirring the pulp and the acid(s) at a temperature of 17 to 40°C both inclusive for 0.1 to 24 hours both inclusive.

In the pretreating step (2), the oxygen concentration in the pretreatment reaction system is set preferably to 3% or less, more preferably to 1% or less. This manner can give a cellulose acetate more remarkably good in hue.

In this case, it is preferred to introduce an inert gas into the pretreatment reaction system to adjust the oxygen concentration therein. A demonstration will be made about an example of a method for the introduction of the inert gas. Before the wood pulp and acetic acid are brought into contact with each other, the inert gas having a predetermined flow rate is passed through the liquid-sealed pretreatment system. In this way, the oxygen concentration in the pretreatment reaction system can be set to 3% or less, preferably to 1% or less.

In the present disclosure, the inert gas may be, for example, nitrogen gas, helium gas, argon gas, or neon gas. Out of these gases, nitrogen gas is preferred since the gas is inexpensive and is easily available.

When the crushed wood pulp and acetic acid are brought into contact with each other to pretreat the wood pulp, it is preferred to put the crushed wood pulp beforehand in an environment having an oxygen concentration of 3% or less, and bring the pulp into contact with acetic acid.

In the method for producing the cellulose acetate in the present disclosure, the oxygen concentration is measurable using an oxygen concentration meter.

Also in a precooling device used to precool acetic anhydride, acetic acid, a catalyst and others, the oxygen concentration is set preferably to 3% or less, more preferably to 1% or less. This is because in the acetylating step (3), which is to be subsequently performed, contamination of oxygen into an acetylating reaction system can be decreased so that a cellulose acetate more remarkably good in hue can be obtained. The oxygen concentration can be lowered by introducing an inert gas into the precooling device in the same way as used in the pretreating step (2).

### (Acetylation)

In the step (3) of causing the wood pulp to react with acetic anhydride to acetylate the pulp, the acetylation can be started, specifically, by adding the pulp activated by the pretreatment to a mixture composed of acetic acid, acetic anhydride, and sulfuric acid, by adding a mixture composed of acetic acid and acetic anhydride, and sulfuric acid to the pulp activated by the pretreatment, or by some other method. Acetic acid used may be a product in which the concentration of acetic acid is 99% or more by weight. Sulfuric acid used is preferably a product in which the concentration of sulfuric acid is 98% or more by weight.

When the mixture of acetic acid and acetic anhydride is prepared, the mixture is not particularly limited as far as the mixture contains acetic acid and acetic anhydride. About the proportion of acetic acid and that of acetic anhydride, the amount of acetic anhydride is preferably from 200 parts to 400 parts both inclusive by weight for 300 parts to 600 parts both inclusive by weight of acetic acid. The amount of acetic anhydride is more preferably from 240 parts to 280 parts both inclusive by weight for 350 parts to 530 parts both inclusive by weight of acetic acid.

About the respective proportions of the pulp, the mixture of acetic acid and acetic anhydride, and sulfuric acid, the amount of the mixture of acetic acid and acetic anhydride is from 500 parts to 1000 parts both inclusive by weight, and the amount of sulfuric acid is preferably from 5 parts to 15 parts both inclusive by weight, more preferably from 7 parts to 13 parts both inclusive by weight, even more preferably from 8 parts to 11 parts both inclusive by weight for 100 parts by weight of the pulp.

The acetylating step (3) is performed in a case under a reduced pressure condition, or a case under an ambient pressure condition as described below. Thus, the cases will be described to be distinguished from each other.

### <Reduced Pressure Condition>

A description will be made about the method for producing the cellulose acetate, called reduced pressure acetylation. In the acetylating step (3), at least at a starting time of the acetylating reaction, it is preferred to set the vacuum degree in an acetylating reaction system to 70 Torr (9.3 kPa) or less. The lower limit value thereof is not particularly limited. The value is, for example, 60 Torr (8.0 kPa) or more. When in this way acetic acid is used as a solvent for acetic anhydride for the acetylating reaction, the evaporation of acetic acid is promoted to heighten the concentration of acetic anhydride consumed by the acetylating reaction, so that the acetylating reaction can be promoted. Consequently, the use proportion of acetic anhydride, and the solvent such as acetic acid can be decreased to improve the productivity of the resultant cellulose acetate. This method has an advantage of making it unnecessary to cool the mixed solution of acetic acid and acetic anhydride for restraining a temperature rise following the acetylating reaction. Moreover, when the inside of the acetylating reaction system is heightened in vacuum degree to reduce the pressure therein, the oxygen concentration in the acetylating reaction system is easily made low.

At least from the starting time of the acetylating reaction to a time when the cellulose acetate is converted from an uneven state to an even state, it is more preferred to set the vacuum degree in the acetylating reaction system to 70 Torr (9.3 KPa) or less. This is for restraining the temperature rise following the acetylating reaction.

A demonstration will be made about an example of a procedure of the acetylating step (3) in a case where the vacuum degree of the inside of the acetylating reaction system is set to 70 Torr (9.3 kPa) or less. The pulp activated by the pretreatment through the pretreating step (2) is brought into contact with the mixture of acetic acid and acetic anhydride, and then the inside of the acetylating reaction system is reduced in pressure, using, for example, a vacuum pump to adjust the vacuum degree to 70 Torr (9.3 kPa) or less. Subsequently, thereto is added the mixture containing sulfuric acid and acetic acid to start the acetylating reaction. Steam of the mixture of evaporated acetic acid and acetic anhydride is concentrated through a condenser to be distilled to the outside of the reaction system. In this way, the reaction product is gradually concentrated. When a predetermined volume (distilled-out volume corresponding to a target reaction proportion) thereof is distilled out, or when the liquid to be distilled out is substantially lost, the inside of the reaction system is adjusted to an ambient pressure. From a time when the ambient pressure is adjusted, or a time when a rise of the temperature of the inside of the reaction system stops, the system is kept at it is for 1 to 30 minutes both inclusive.

When the vacuum degree in the acetylating reaction system is set to 70 Torr (9.3 kPa) or less, the highest attainment temperature in the acetylating reaction system is set to a temperature preferably from 55°C to 75°C both inclusive, more preferably from 60°C to 70°C both inclusive. The filtration degree of the resultant cellulose acetate can also be improved.

When the highest attainment temperature in the acetylating reaction system is set to a temperature from 55°C to 75°C both inclusive, the temperature can be realized by raising the temperature of the system by effect of reaction heat of acetic anhydride by charging the wood pulp beforehand into the acetylating mixed liquid that is not cooled, and then stirring the liquid. Specifically, the system temperature can be finally raised up to a temperature from 55°C to 75°C both inclusive, for example, by adding, into 100 parts by weight of the wood pulp, a mixture including 200 parts to 400 parts both inclusive by weight of acetic anhydride and 5 parts or less by weight of an acidic catalyst (such as sulfuric acid), and then holding the system over a necessary period, which is from 20 minutes to 40 minutes both inclusive.

The period required for the acetylating reaction is desirably from 40 minutes to 60 minutes both inclusive. In the present disclosure, the period required for the acetylating reaction denotes a period from a time when the pulp contacts the solvent, acetic anhydride, and the catalyst to start the reaction to a time when a neutralizing agent is charged to the system.

After the acetylating reaction is advanced at a vacuum degree of 70 Torr (9.3 kPa) or less, the oxygen concentration in the acetylating reaction system is set preferably to 3% or less, more preferably to 1% or less. This is because this case makes it possible to prevent oxygen from being involved into the cellulose acetate (acetic acid dope) in the acetylating reaction system to yield the cellulose acetate with a more remarkably good hue. When the inside of the reaction system is returned to an ambient pressure, the oxygen concentration can be lowered by introducing an inert gas into the acetylating reaction system.

### <Ambient Pressure Condition>

A description will be made about the method for producing the cellulose acetate, called an acetylating method. When a pulp is acetylated under an ambient pressure condition, it is necessary to lower the temperature of acetic anhydride and acetic acid to be added in order to control the reaction temperature. When acetylation is attained under the ambient pressure condition in the acetylating step (3), the oxygen concentration in the acetylating reaction system is set preferably to 3% or less, more preferably to 1% or less. This manner can give a cellulose acetate more remarkably good in hue.

This is because this case makes it possible to prevent oxygen from being involved into the cellulose acetate (acetic acid dope) in the acetylating reaction system to yield the cellulose acetate with a more remarkably good hue. In this case, the oxygen concentration can be lowered by introducing an inert gas into the acetylating reaction system in the same way as used in the pretreating step (2).

The highest attainment temperature in the acetylating reaction system is preferably in a middle temperature range. Specifically, the temperature is preferably from 38°C to 52°C both inclusive, more preferably from 42°C to 50°C both inclusive. This manner can give a cellulose acetate more remarkably good in hue.

When the pulp is acetylated to set the highest attainment temperature of the inside of the acetylating reaction system into the middle temperature range, it is preferred that the present method has the step of precooling acetic anhydride. When acetic acid, a catalyst, and others besides acetic anhydride are brought into contact with the wood pulp, all of these substances are more preferably precooled. After a mixed solution of acetic anhydride, and acetic acid (not being acetic anhydride), the catalyst and the others is prepared, the prepared solution may be precooled. The precooling temperature is preferably from -25 to -10°C both inclusive, more preferably from -22 to -20°C both inclusive. When the temperature is set into any one of the ranges, the highest attachment temperature of the inside of the reaction system is set into the middle temperature range (of 38 to 52°C both inclusive) in the acetylating step (3). This manner makes it possible to yield a cellulose acetate more remarkably good in hue.

For example, an acetylating mixed liquid is beforehand cooled to a temperature from -25°C to - 10°C both inclusive, this mixed liquid including acetic acid as a solvent, acetic anhydride as an acetylating agent, and sulfuric acid as a catalyst. The wood pulp is charged into this acetylating mixed liquid, and the liquid is stirred. The use amount of acetic anhydride is made considerably excessive over the amount of the cellulose which is to react with acetic anhydride and the amount of water present in the system. In this way, the temperature of the cooled acetylating mixed liquid is raised by reaction heat of acetic anhydride, and the highest attachment temperature can be set to a temperature from 38°C to 52°C both inclusive. It is also allowable to conduct the reaction under the stirring condition without applying heat to the inside nor outside of the reaction system from the outside, or to cool the reaction system with a cooling medium under the stirring condition to be adjusted into the middle temperature.

The reactor used in the acetylating step (3) may be a known reactor (acetylating reactor) used ordinarily to produce a cellulose acetate. The reactor is preferably a mixing type reactor.

The period required for the acetylating reaction is desirably from 60 minutes to 90 minutes both inclusive. The period required for the acetylating reaction denotes a period from a time when the pulp contacts the solvent, acetic anhydride, and the catalyst to start the reaction to a time when a neutralizing agent is charged to the system.

At an initial stage of the acetylating reaction, the acetylating reaction becomes a reaction in a solid-liquid heterogeneous system. Thus, it is advisable to raise the temperature over a period which is as long as possible in order to advance the acetylating reaction while a depolymerization acetylating reaction is restrained, thereby decreasing an unreacted fraction of the reactants. From the viewpoint of the productivity of the cellulose acetate, the temperature is raised preferably in 45 minutes or shorter, more preferably in 30 minutes or shorter.

### (Hydrolysis)

The cellulose acetate yielded by the acetylation is in a state that acetyl groups are substituted for substantially the whole of its hydroxyl groups. In order to adjust this substitution degree to a desired substitution degree, the cellulose acetate needs to be hydrolyzed. When sulfuric acid is used as a catalyst in the hydrolyzing step (4), the sulfuric acid is bonded to cellulose in the form of a sulfate by the acetylating reaction. Thus, the hydrolysis also has a purpose of hydrolyzing this sulfate to be removed for an improvement of the thermal stability after the end of the acetylating reaction.

The adjustment of the acetyl substitution degree can be made by the addition of water which may be water vapor, dilute acetic acid, or a neutralizing agent for the stopping of the acetylating reaction, this agent being made of, for example, a carbonate, acetate, hydroxide or oxide of calcium, magnesium, iron, aluminum or zinc, or the like. Water may be added to react with acetic anhydride present in the reaction mixture including the cellulose acetate to produce a carboxylic acid, and set the following into a range from 5% to 70% both inclusive by mole of the carboxylic acid: the content by percentage of water in the reaction mixture including the cellulose acetate yielded after the acetyl substitution degree is adjusted. If the content is less than 5% by mole, the hydrolysis reaction does not advance while depolymerization advances. Consequently, the viscosity of the cellulose acetate is made low. If the content is more than 70% by mole, the cellulose acetate yielded after the end of the acetylating reaction (the cellulose acetate before the hydrolysis) precipitates so that the resultant precipitation is removed out from the hydrolysis reaction system. Consequently, the hydrolysis reaction of the precipitating cellulose acetate comes not to advance.

For reference, dilute acetic acid denotes an aqueous acetic acid solution having a concentration of 1% to 50% both inclusive by weight. When an aqueous magnesium acetate solution is used, this aqueous solution is preferably a solution having a concentration of 5% to 30% both inclusive by weight.

If the concentration of sulfate ions is high in the reaction mixture containing the cellulose acetate, the sulfate cannot be effectively removed. It is therefore preferred to add thereto an aqueous solution of an alkaline earth metal salt of acetic acid, such as magnesium acetate, or an acetic acid/water mixed solution to produce a soluble sulfuric acid salt, thereby lowering the concentration of the sulfate ions. It is preferred to adjust the amount of the sulfate ions in the reaction mixture containing the cellulose acetate into a range from 1 part to 6 parts both inclusive by weight for 100 parts by weight of the cellulose acetate (the 100 parts being an amount in terms of cellulose). When a solution of magnesium acetate in mixed acetic acid and water is added to the reaction mixture containing the cellulose acetate, the following can be simultaneously attained: the stop of the acetylating reaction; and a lowering of the proportion of the amount by weight of the sulfate ions to 100 parts by weight of the cellulose acetate (the 100 parts being an amount in terms of cellulose).

In the hydrolyzing step (4), the oxygen concentration in the hydrolysis reaction system is set to 3% or less. The concentration is more preferably 1% or less. This manner makes it possible to yield a cellulose acetate remarkably good in hue even when a low-quality pulp is used. In particular, a cellulose acetate can be yielded in which a hemicellulose component is not easily decomposed and about which a remarkably good filtration property is shown. Consequently, the cellulose acetate can be yielded with a slight amount of a coloring substance and with a remarkably good hue. Moreover, this manner does not require the use of any extra organic solvent to be remarkably good also in the point of not hindering the productivity of the cellulose acetate.

The hydrolyzing step (4) may make use of a method of using water vapor to hydrolysis the pulp at a high temperature (high-temperature ripening). In this case, it is preferred to adjust the oxygen concentration in the hydrolysis reaction system to 3% at least before water vapor is blown thereinto. When hemicellulose is decomposed at a high temperature, the presence of oxygen causes the hue to be deteriorated. The adjustment is for preventing the deterioration.

Accordingly, in the method for producing the cellulose acetate in the present disclosure, also in the hydrolysis reaction system, an inert gas is introduced thereinto, thereby setting the oxygen concentration in the hydrolysis reaction system preferably to 3% or less, more preferably to 1% or less. A demonstration will be made about an example of a procedure of the hydrolyzing step (4) in this case.

After the addition of the neutralizing agent is started to the reaction mixture containing the completely substituted cellulose acetate about which the acetylating step (3) has been ended, and acetic acid, an inert gas is sealed into the hydrolysis reaction system until the pressure in this system is raised up to 10 kg/cm² or less (the lower limit value thereof is, for example, 4 kg/cm²). The pressure is then released down to a pressure equal to the atmospheric pressure, or a finely increased pressure. This pressure-raising and pressure-releasing operation is repeated until the oxygen concentration in the reaction system turns to 3% or less, preferably to 1% or less. Alternatively, in the same way as used in the pretreating step (2), an inert gas may be introduced into the hydrolysis reaction system to lower the oxygen concentration.

The hydrolyzing step (4) can be performed either when the temperature in the reaction system is an ambient temperature (middle temperature) or when the temperature is a high temperature. The hydrolysis performed at an ambient temperature is called an ambient temperature ripening, and denotes one in which the highest attainment temperature in the reaction system is 55°C or higher and lower than 100°C, preferably 55°C or higher and lower than 90°C. The hydrolysis performed at a high temperature is called a high temperature ripening, and denotes one in which the highest attainment temperature in the reaction system ranges from 100°C to 200°C both inclusive. In the high temperature ripening, water vapor is used to raise the temperature in the system.

Preferably, the hydrolysis of the cellulose acetate is performed at an ambient temperature (middle temperature) from the viewpoint of the hue thereof. In other words, this case causes the hydrolysis reaction to advance sufficiently, and makes it more difficult that depolymerization of a hemicellulose component is generated, this hemicellulose being derived from a low-quality pulp than the case of high temperatures. Thus, a cellulose acetate more remarkably good in hue can be obtained.

When the hydrolyzing step is performed at a high temperature, the hue is made worse than when performed at an ambient temperature (middle temperature). However, the hemicellulose can be made chemically finer, so that the filtration degree is made more remarkably good. However, the use of the method and device for producing the cellulose acetate in the present disclosure makes it possible to restrain a deterioration of the hue at a minimum level even when the hydrolyzing step is performed at a high temperature.

### (precipitation)

In the step (5) of precipitating the cellulose acetate, the acetyl substitution degree of which is adjusted by the hydrolysis, the mixture containing the cellulose acetate is mixed with a precipitating agent such as water or dilute acetic acid, and the produced cellulose acetate (precipitation) is separated. In this way, the precipitation is obtained. By washing the precipitation with water, free metal components, a sulfuric acid component, and other components can be removed. The precipitating agent used to yield the precipitation of the cellulose acetate is preferably dilute acetic acid.

In order to heighten the cellulose acetate in thermal stability after the hydrolyzing step (4) (after the reaction system is completely neutralized), it is particularly preferred when the system is washed with water to add, to the component water, an alkali metal compound and/or an alkaline earth metal compound, particularly, a calcium compound such as calcium hydroxide, as a stabilizer.

After the step (5) of precipitating the cellulose acetate, the cellulose acetate may be dried. The method for the drying is not particularly limited, and may be a known method. The cellulose acetate may be dried, for example, under a blowing condition or reduced pressure condition. The drying method may be, for example, drying with hot wind.

### [Device for Producing Cellulose Acetate]

A detailed description will be made about a device for producing a cellulose acetate. The device for producing the cellulose acetate in the present disclosure has a crusher which crushes a wood pulp, a pretreating unit which brings the crushed wood pulp into contact with acetic acid to pretreat the wood pulp, an acetylating reactor which causes the wood pulp to react with acetic anhydride after the pretreatment to acetylate the wood pulp, a ripening tank which hydrolyzes the cellulose acetate which is yielded by the acetylation, a precipitating tank which precipitates the cellulose acetate, the acetylation degree of which is adjusted by the hydrolysis, a unit which introduces an inert gas into the ripening tank, a sealing unit which takes away oxygen in the ripening tank to the outside of the ripening tank, but does not cause oxygen to flow backward into the ripening tank, and a pressure adjustor which adjusts pressure in the ripening tank.

The following are used to adjust the oxygen concentration in the ripening tank to 3% or less, preferably 1% or less: a unit which introduces an inert gas into the ripening tank, a sealing unit which takes away oxygen in the ripening tank to the outside of the ripening tank, and causes oxygen to flow backward into the ripening tank, and a pressure adjustor which adjusts pressure in the ripening tank. The oxygen concentration in the ripening tank is measurable by setting an oxygen concentration meter on an airing line through which the ripening tank and the sealing unit are linked to each other. When the hydrolysis is performed at an ambient temperature, a method is effective in which a water sealing element is used as the sealing unit.

Besides the crusher, the pretreating unit, the acetylating reactor, the ripening tank, and the precipitating tank, the device for producing the cellulose acetate in the present disclosure may be equipped with a precooler for precooling acetic acid, a catalyst, and others as well as acetic anhydride which is brought into contact with the wood pulp in the acetylating reactor. The precooler is connected to the acetylating reactor to make it possible to introduce acetic anhydride precooled and the others precooled into the acetylating reactor. Moreover, an instrument for introducing an inert gas into a gas transporting device of the crusher may be set up onto the device.

The device for producing the cellulose acetate in the present disclosure is preferably equipped with a vacuum machine for heightening the vacuum degree of the acetylating reactor. This manner makes it possible to attain reduced pressure acetylation.

In the device for producing the cellulose acetate in the present disclosure, each of the crusher, the pretreating unit, the acetylating reactor, the ripening tank, and the precipitating tank desirably also has therein a unit which introduces an inert gas thereinto, a sealing unit, and/or a pressure adjustor. The sealing unit is, for example, a water sealing element. This element makes it possible to lower the oxygen concentration in the whole of the reaction system to produce a cellulose acetate very remarkably good in hue. In this case, it is desired that the crusher, the pretreating unit, the acetylating reactor, the ripening tank, and the precipitating tank are connected to each other in such a manner that the reaction mixture can be continuously shifted in these units without contacting oxygen outside the system as much as possible.

The oxygen concentration in each of the crusher, the pretreating unit, the acetylating reactor, and the precipitating tank is measurable, in the same way as that in the ripening tank, by setting an oxygen concentration meter onto an airing line through which each of the crusher, the pretreating unit, the acetylating reactor, and the precipitating tank is linked to the sealing unit.

Hereinafter, a detailed description will be made about embodiments of the method and device for producing the cellulose acetate according to the present disclosure with reference to the drawings.

### [Embodiment 1] Reduced Pressure Acetylation/High Temperature Ripening

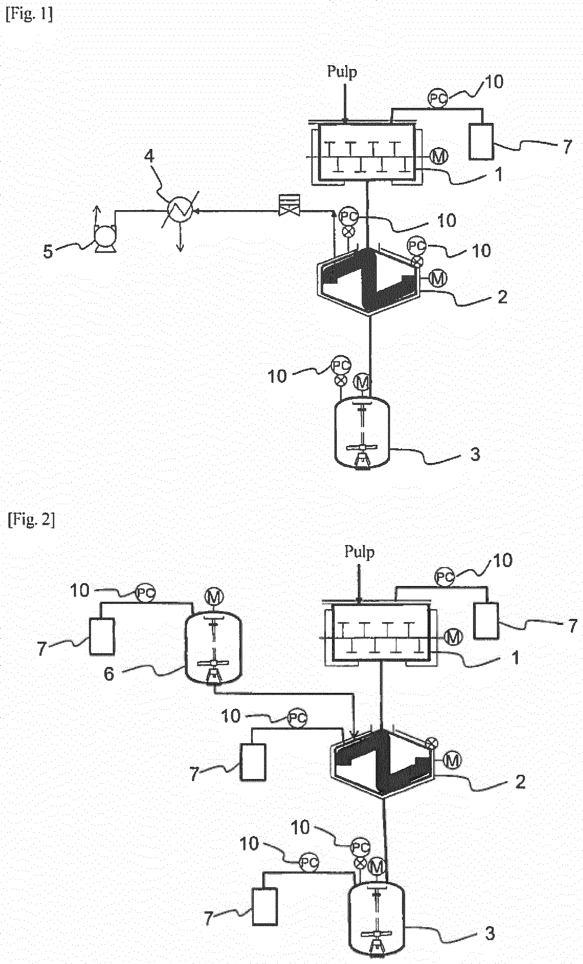

Using a producing device as illustrated in Fig. 1, a cellulose acetate can be produced. A pressure adjustor 10 is connected to each of a pretreating unit 1, an acetylating reactor 2, and a ripening tank 3. The pressure adjustor 10 and/or a water sealing element 7 is/are connected to the pretreating unit 1. The pressure adjustor 10 makes the inside of each of these units into a finely increased pressure state, and then an inert gas is airtightly sealed into the unit to prevent reverse diffusion of oxygen from the outside of the producing device. A pulp put into the pretreating unit 1 is a fluff pulp yielded by using a crusher (not illustrated) to crush a wood pulp. The fluff pulp is put into the pretreating unit 1. While stirred, the pulp is then brought into contact with acetic acid to pretreat the pulp so as to be activated. In Fig. 1, M represents a motor, and the motor is used to stir a reaction mixture in each of the individual units. This acetic-acid-impregnated pulp (cellulose) is put into the acetylating reactor 2 while stirred. In this way, a solution of acetic anhydride and acetic acid is charged into the acetylating reactor 2. Subsequently, a vacuum pump 5 is used to reduce the acetylating reactor 2 in pressure to make the vacuum degree of the inside thereof to 70 Torr (9.3 kPa) or less. Thereafter, a solution of sulfuric acid and acetic acid is charged into the acetylating reactor 2 to start an acetylating reaction. The reaction system is turned into a boiling state, and a mixed steam of acetic acid and acetic anhydride is condensed through a condenser 4 to be distilled out to the outside of the reaction system. When a predetermined amount of the distilled-out liquid is distilled out, the vacuum pump 5 is stopped. By heightening the vacuum degree of the acetylating reactor 2 to decrease the reactor in pressure, reaction heat is removed by latent heat of vaporization of acetic acid during the acetylating reaction. However, the temperature of the reaction system is made higher in this case than in an acetylation at a middle temperature, which will be detailed later. For this reason, the acetylating period can be made short, and the productivity of a cellulose acetate can be improved. An aqueous solution of magnesium acetate is added and blended into the acetylating reactor 2 to neutralize sulfuric acid in the system completely, and then nitrogen is put into the acetylating reactor 2 to return the pressure therein to the atmospheric pressure. The reaction mixture in the acetylating reactor 2 is shifted into the ripening tank 3, and nitrogen is sealed into the ripening tank 3 in the state that the tank is airtightly sealed to increase the pressure, and then the increased pressure is released. Such operations are performed until the oxygen concentration therein turns to 3% or less. The oxygen concentration is measurable, using an oxygen concentration meter. The oxygen concentration meter may be set onto an airing line through which the ripening tank and the sealing unit are connected to each other. Water is put into the ripening tank 3 and a water vapor having a high pressure (for example, a gauge pressure of 5 kg/cm²) is blown into the ripening tank 3 while the reaction mixture is stirred. Over a predetermined period (of 40 to 60 minutes both inclusive), the temperature of the tank is raised. The raised temperature (for example, a temperature of 140 to 200°C both inclusive) is kept for 30 to 50 minutes both inclusive, and then the reactants in the ripening tank 3 are gradually returned into an ambient pressure to conduct a hydrolysis reaction of the cellulose acetate. While the reaction mixture is vigorously stirred, a dilute solution of acetic acid in water is added thereto to prepare a granular cellulose acetate. The produced cellulose acetate (precipitation) is separated. In this way, the precipitation is yielded and then sufficiently washed with water. At the time of the washing with water, the following is/are added as one or more stabilizers to this liquid water to remove free metal component, a sulfuric acid component and others to heighten the cellulose acetate in thermal stability: an alkali metal compound and/or an alkaline earth metal compound, particularly, a calcium compound such as calcium hydroxide. After the washing with water, the resultant is dehydrated and dried. In this way, the cellulose acetate can be gained.

### [Embodiment 2] Ambient Pressure Acetylation/Ambient Temperature Ripening

Using a producing device as illustrated in Fig. 2, a cellulose acetate can be produced. A pressure adjustor 10 and a water sealing element 7 are connected to each of a pretreating unit 1, an acetylating reactor 2, a ripening tank 3 and a precooler 6. The pressure adjustor 10 makes the inside of each of these units into a finely increased pressure state, and then an inert gas is airtightly sealed into the unit to prevent reverse diffusion of oxygen from the outside of the producing device. A pulp put into the pretreating unit 1 is a fluff pulp yielded by using a crusher (not illustrated) to crush a wood pulp. The fluff pulp is put into the pretreating unit 1. While stirred, the pulp is then brought into contact with acetic acid to pretreat the pulp so as to be activated. In Fig. 2, M represents a motor, and the motor is used to stir a reaction mixture in each of the individual units. A solution of acetic anhydride and acetic acid, sulfuric acid, and acetic acid are charged into the precooler 6. These components are beforehand cooled to a temperature of -25 to -10°C both inclusive, and this state is kept. The solution in the precooler 6 is charged into the acetylating reactor 2. An acetic-acid-impregnated pulp (cellulose) is then charged into the acetylating reactor 2 in which the oxygen concentration is 3% or less, preferably 1% or less while the solution is stirred. The oxygen concentration is measurable, using an oxygen concentration meter. The oxygen concentration meter may be set onto a path through which the water sealing element 7 is linked to each of a crusher (not illustrated), the pretreating unit 1, the acetylating reactor 2, the ripening tank 3, and the precooler 6. By heat of the acetylating reaction, the highest attainment temperature of the reaction system is adjusted to a temperature of 38 to 52°C both inclusive, and a period until the system reaches the highest attainment temperature is adjusted. After the system reaches the highest attainment temperature, the acetylating reaction is continued over a predetermined period (of 30 to 50 minutes both inclusive). An aqueous solution of magnesium acetate is added and blended into the acetylating reactor 2 to neutralize sulfuric acid in the system partially. The reaction mixture in the acetylating reactor 2 is shifted into the ripening tank 3 in which the oxygen concentration is 3% or less, preferably 1% or less. A water vapor having a high pressure (for example, a gauge pressure of 5 kg/cm²) is blown into the ripening tank 3 while the reaction mixture is stirred. Over a predetermined period (of 50 to 60 minutes both inclusive), the temperature of this system is caused to reach an ambient temperature (middle temperature) (of 55°C or higher, and lower than 110°C). When the temperature is being raised, an aqueous solution of magnesium acetate is added and blended into the system to neutralize sulfuric acid in the system partially. Over a predetermined period (of 60 to 70 minutes both inclusive), the system is kept at an ambient temperature (middle temperature), and thereafter an aqueous solution of magnesium acetate is added and blended into the system to neutralize sulfuric acid in the system completely. In this way, a hydrolysis reaction of the cellulose acetate is conducted. While the reaction mixture is vigorously stirred in the ripening tank 3, a dilute solution of acetic acid in water is added thereto to prepare a flake-form cellulose acetate. A separator (not illustrated) is used to separate the cellulose acetate, and then the cellulose acetate is sufficiently washed with water. The cellulose acetate is then taken out, and dried. In this way, the cellulose acetate can be gained.

Any cellulose acetate in the present disclosure, any cellulose acetate produced by the method for producing the cellulose acetate, and any cellulose acetate produced by use of the device for producing the cellulose acetate are usable in a wide range, for example, for clothing fibers, cigarette filter chips, plastics, films, and paints.

### [Examples]

Hereinafter, the present invention will be described in detail by way of working examples thereof. However, the invention is not limited by these examples. Hereinafter, the word "part(s)" denotes "part(s) by weight" unless otherwise specified.

Methods described below were used to evaluate individual physical properties described in the working examples and comparative examples which will be detailed later.

### <α-Cellulose Content by Proportion>

A pulp having an already known weight was continuously extracted with an aqueous 17.5% solution of sodium hydroxide and an aqueous 9.45% solution thereof at 25°C. A soluble fraction of the extracted liquid was oxidized with potassium dichromate. From the volume of potassium dichromate which was required for the oxidization, the weight of β,γ-cellulose was determined. A value obtained by subtracting the β,γ-cellulose weight from the initial weight of the pulp was defined as the weight of an insoluble fraction of the pulp, that is, the weight of α-cellulose (TAPPI T203). The proportion of the weight of the insoluble fraction of the pulp in the initial weight of the pulp is the content by proportion (% by weight) of α-cellulose.

### <Absorptiometry Hue>

### (1) Measurement of Water Content by Percentage in Cellulose Acetate

An infrared aquameter (METTLER TOLEDO HB43) was used to measure the water content by percentage in a cellulose acetate, and the measured value was recorded on a recording sheet.

### (2) Measurement of Absorbance

A sample was initially prepared. 1) In an Erlenmeyer flask, DMSO was weighed into 95.00 g. 2) A stirrer rotator was put into the Erlenmeyer flask, and the flask was plugged up with a cellophane piece and a silicon cap, and then the liquid was stirred. 3) A cellulose acetate sample was weight into 5.00 g on, for example, a medical paper piece, and the sample was added into the Erlenmeyer flask, in which the stirring was performed. 4) The flask was plugged up with a cellophane piece and the silicon cap, and the liquid was then stirred with the stirrer for 1 hour. 5) The liquid was shaken with a (high-speed) rotating shaker for 2 hours. 6) The liquid was taken out from the rotating shaker, and then allowed to stand still for 30 minutes to be defoamed. In this way, the sample was prepared.

Next, the absorbance thereof was measured. Immediately after the preparation of the sample, in other words, immediately after the sample was taken out from the rotating shaker, and then allowed to stand still for 30 minutes and defoamed, an instrument UV-1700 manufactured by Shimadzu Corporation was used to measure the absorbance at a wavelength λ of 430 nm and that at a wavelength λ of 740 nm. Specifically, 1) a power source of the instrument was turned on before 30 minutes or longer from the measurement. It was then verified that the instrument was stabilized. 2) DMSO was put as a blank liquid for reference into a 10-cm glass cell to make a base line correction. 3) The sample in the Erlenmeyer flask was shifted into the 10-cm glass cell not to generate any air bubbles. 4) The glass cell in which the sample was inj ected was exchanged to the front measuring cell. 5) A start bottom of the instrument was pushed to start the measurements. 6) Displayed measurement results were recorded onto a recording sheet.

### (3) Absorptiometry Hue

A numerical value obtained in accordance with a calculating equation described below was defined as the "absorptiometry hue" value of a cellulose acetate in a solvent therefor. 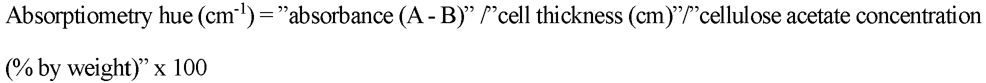 Absorptiometry hue (cm-1) = "absorbance (A - B)" /"cell thickness (cm)"/'cellulose acetate concentration (% by weight)" x 100

Absorbance: one according to a spectrophotometer UV-1700 manufactured by Shimadzu Corporation.
A: absorbance at 430 nm (the yellowness of the liquid is measured)
B: absorbance at 740 nm (base line; the turbidity of the liquid is measured) 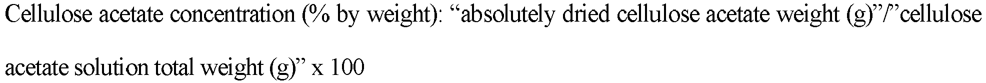
Cellulose acetate concentration (% by weight): "absolutely dried cellulose acetate weight (g)"/"cellulose acetate solution total weight (g)" x 100 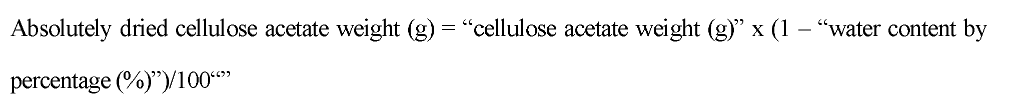 Absolutely dried cellulose acetate weight (g) = "cellulose acetate weight (g)" x (1 - "water content by percentage (%)")/100"" Water content by percentage (%): value measured with the above-mentioned infrared aquameter

### <Xylose Content by Mole>

A cellulose sample was caused to undergo a hydrolysis step, a neutralizing step with sodium hydroxide, and a filtrating step through a filter, and then a product HPLC (LC-20A system) was used to calculate out, from the resultant data, not only the proportion of xylose but also the respective proportions of the other constituting saccharides. The total quantity of pentoses and hexoses was used as a basis to gain the proportion (% by mole) of the content by mole of xylose. This was defined as the proportion (% by mole) ofthe content by mole of xylose in the sum ofthe respective contents by mole of xylose, mannose, and glucose.

Conditions for the HPLC measurements are as follows:
Column: TSK-gel Sugar AXG 4.6 mmI.D. × 15 cm (Tosoh Corp.)
Column temperature: 70°C
Mobile phase: 0.5 mol/L buffer liquid of potassium borate; pH: 8.7
Mobile phase flow rate: 0.4 mL/min
Post column label: reaction reagent: 1 w/v% alginine/3 w/v% boric acid
   Reaction reagent flow rate: 0.5 mL/min
   Reaction temperature: 150°C
Detecting wavelengths: Ex. 320 nm, and Em. 430 nm

### <Calcium Content and Magnesium Content>

An undried sample was weighed into 3.0 g in a crucible. The sample was carbonized on an electric heater, and then incinerated in an electric furnace having a temperature from 750°C to 850°C both inclusive for 2 hours. The sample was naturally cooled for about 30 minutes, and then thereto was added 25 mL of a 0.07% hydrochloric acid solution. The sample was then heated at 220°C to 230°C both inclusive to be dissolved. After the natural cooling, distilled water was used to increase the volume of the dissolved liquid up to 200 mL. This was used as an inspecting liquid. An atomic absorption spectrophotometer was used to measure the absorbance of this inspecting liquid together with that of a standard liquid to gain the calcium (Ca) content in the inspecting liquid or the magnesium (Mg) content therein. In accordance with an equation described below, a conversion was made to gain the calcium (Ca) content in the sample or the magnesium (Mg) content therein. The water content in the sample is measurable using, for example, a Kett moisture meter (METTLER TOLEDO HB43). Onto an aluminum receiver of the Kett moisture meter, about 2.0 g of the sample which is in a water-contained state, is put. The sample is heated at 120°C until the weight does not come to be changed. From a change in the weight before and after the heating, the water content (% by weight) in the sample can be calculated. [Math. 2] $" Ca or Mg content \left(ppm\right) in sample " = \frac{" Ca or Mg content \left(ppm\right) in inspecting liquid " \times 200}{" Sample weight \left(g\right) " \times \left(1-"water content \left(% by weight\right)"/100\right)}$

### <6% Viscosity>

In an Erlenmeyer flask, 3.00 g of a dry sample, and 39.90 g of a 95% acetone solution in water are collected. The flask was airtightly plugged on and the liquid was stirred for about 1 hour. Thereafter, a rotating shaker was used to shake the liquid for about 1.5 hours to dissolve the sample completely. The resultant 6-wt/vol%-solution was shifted into an Ostwald viscometer up to its predetermined marked line, and then the temperature thereof was adjusted to 25 ± 1°C over about 30 minutes. A measurement was made about a flowing-down period of the liquid between its time-measuring marked lines, and the 6% viscosity thereof was calculated out in accordance with the following equation: $6 % Viscosity \left(mPa\cdot s\right) = flowing - down period \left(sec.\right) \times viscometer coefficient$

In accordance with an equation described below, the viscometer coefficient is gained by using a viscometer correcting standard liquid [trade name: "JS-200" (according to JIS Z 8809), manufactured by SHOWA SHELL SEKIYU K. K.] and making the same operation as described above to measure a flowing-down period thereof. 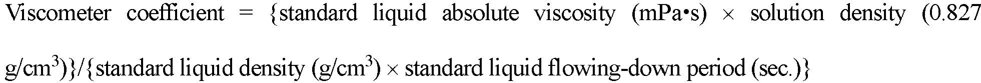 Viscometer coefficient = {standard liquid absolute viscosity (mPa•s) × solution density (0.827 g/cm3)}/{standard liquid density (g/cm3) × standard liquid flowing-down period (sec.)}

### <Examples 1 to 5>

In each of the examples, the reactor illustrated in Fig. 1, and a material shown in Table 1 were used to produce a cellulose acetate. A crusher (not illustrated) was used to crush a sulfite method pulp (water content by percentage: 7%) as the cellulose material into a fluff form. Into the pretreating unit 1 were charged 100 parts of the fluff pulp, and then 37 parts of acetic acid were used to pretreat and activate the pulp (at 35°C for 60 minutes). The pulp impregnated with this liquid acetic acid was put into the acetylating reactor 2 while stirred. Into the acetylating reactor 2 were charged 588 parts of a 45% acetic-anhydride/acetic-acid solution. The vacuum pump 5 was used to reduce the acetylating reactor 2 in pressure to control the vacuum degree of the inside thereof to 65 Torr. When the solution temperature turned to 30°C, 44 parts of a 3.0% sulfuric-acid/acetic-acid solution were charged into the acetylating reactor 2 through a catalyst/acetylating-agent mixed liquid supplying line (not illustrated) to start acetylating reaction. The acetylating reaction system turned into a boiling state, and a mixed steam of acetic acid and acetic anhydride was condensed through the condenser 4 to start the distillation-out thereof. The acetylating reaction temperature was kept at about 55°C, which corresponds to the boiling temperature. When 167 parts of the distilled-out liquid were distilled out after the start of the acetylating reaction, the vacuum pump 5 was stopped. The reaction was further conducted for about 16 minutes. After the end of the acetylating reaction, 11 parts of an aqueous 24% solution of magnesium acetate were added and blended into the acetylating reactor 2 to neutralize sulfuric acid in the system completely. Thereafter, 150 parts of an aqueous 75% solution of acetic acid were added into the acetylating reactor 2 and the reaction system was stirred for 3 minutes. Nitrogen was then put into the acetylating reactor 2 to return the pressure therein to the atmospheric pressure. The reaction mixture in the acetylating reactor 2 was shifted to the ripening tank 3. In the state that the tank was airtightly sealed, nitrogen was sealed into the ripening tank 3 to increase the pressure up to 4 kg/cm², and then a work of releasing the increased pressure from an airing line was carried out until the oxygen concentration in the ripening tank 3 turned to 1% or less. Thereafter, water vapor having a gauge pressure of 5 kg/cm² was blown into the tank while the reaction system was stirred. In 60 minutes, the temperature was caused to reach 150°C. The system was kept at 150°C for about 30 minutes, and then the reactants in the ripening tank 3 were gradually flashed in the atmospheric air to set the temperature of the reaction mixture to 100°C. While the reaction mixture was vigorously stirred, a dilute solution of acetic acid in water was added thereto to prepare a flake-form cellulose acetate. The produced cellulose acetate (precipitation) was separated. In this way, the precipitation was gained and then washed with water. Thereafter, thereto were added 20 parts of an aqueous 0.1 solution of calcium hydroxide. After the washing with water, the resultant was dehydrated and dried. In this way, the cellulose acetate was gained. In Table 1 are shown results obtained by evaluating the resultant cellulose acetates and the raw materials thereof.

### <Example 6>

The reactor illustrated in Fig. 1, and each material shown in Table 1 were used to prepare a cellulose acetate in the same way as in Examples 1 to 5 except that the 44 parts of the 3.0% sulfuric-acid/acetic-acid solution were changed to 88 parts. In Table 1 are shown results obtained by evaluating the resultant cellulose acetates and the raw materials thereof.

### (Comparative Examples 1 to 5)

In each of the examples, the reactor illustrated in Fig. 1, and a material shown in Table 1 were used to produce a cellulose acetate. The reaction mixture in the acetylating reactor 2 was shifted to the ripening tank 3. Thereafter, a cellulose acetate was prepared in the same way as in Examples 1 to 5 except that the following step was not carried out: the step in which in the state that the tank was airtightly sealed, nitrogen was sealed into the ripening tank 3 to increase the pressure up to 4 kg/cm², and then the work of releasing the increased pressure from the airing line was carried out until the oxygen concentration in the ripening tank 3 turned to 1% or less. In Table 1 are shown results obtained by evaluating the resultant cellulose acetates and the raw materials thereof.

**[Table 1]**

| | Raw material | | Cellulose acetate | | | | |
|---|---|---|---|---|---|---|---|
| | Tree species | α-Cellulose content (%) | Absorptiometry Hue (cm⁻¹) | Xylose (% by mole) | Calcium content (ppm) | Magnesium content (ppm) | 6% Viscosity |
| Example 1 | Spruce tree | 95.6 | 0.58 | 0.92 | 61 | 2 | 86 |
| Comparative Example 1 | | | 0.67 | 0.92 | 63 | 2 | 88 |
| Example 2 | Mixed broad-leaved trees | 98.4 | 0.53 | 0.72 | 63 | 2 | 90 |
| Comparative Example 2 | | | 0.61 | 0.72 | 62 | 3 | 89 |
| Example 3 | Eucalyptus | 96.1 | 0.74 | 1.92 | 67 | 2 | 94 |
| Comparative Example 3 | | | 0.81 | 1.92 | 65 | 3 | 92 |
| Example 4 | Spruce tree | 93.0 | 0.63 | 1.10 | 64 | 3 | 91 |
| Comparative Example 4 | | | 0.83 | 1.13 | 66 | 2 | 90 |
| Example 5 | Pine tree | 87.0 | 1.72 | 5.52 | 69 | 3 | 94 |
| Comparative Example 5 | | | 2.22 | 6.18 | 69 | 2 | 95 |
| Example 6 | Mixed broad-leaved trees | 98.4 | 0.56 | 0.71 | 90 | 6 | 29 |

## Claims

1. A cellulose acetate comprising xylose, mannose, and glucose, and having a magnesium content of 5 ppm or less,
wherein
a proportion of a content by mole of xylose is more than 0.5% by mole and 1.0% or less by mole in a sum of the respective contents by mole of xylose, mannose, and glucose,
at a wavelength of 430 nm, an absorptiometry hue less than 0.60 cm⁻¹ is shown, and
an acetylation degree of 51% to 58% both inclusive is shown,
wherein the absorptiometry hue is measured as described in the description.

2. A cellulose acetate comprising xylose, mannose, and glucose, and having a magnesium content of 5 ppm or less,
wherein
a proportion of a content by mole of xylose is more than 1.0% by mole and 5.0% or less by mole in a sum of the respective contents by mole of xylose, mannose, and glucose,
at a wavelength of 430 nm, an absorptiometry hue of 0.60 cm⁻¹ or more, and less than 0.80 cm⁻¹ is shown, and
an acetylation degree of 51% to 58% both inclusive is shown,
wherein the absorptiometry hue is measured as described in the description.

3. A cellulose acetate comprising xylose, mannose, and glucose, and having a magnesium content of 5 ppm or less,
wherein
a proportion of a content by mole of xylose is more than 5.0% by mole and 7.0% or less by mole in a sum of the respective contents by mole of xylose, mannose, and glucose, and
at a wavelength of 430 nm, an absorptiometry hue of 0.80 cm⁻¹ or more, and less than 1.8 cm⁻¹ is shown,
wherein the absorptiometry hue is measured as described in the description.

4. A method for producing a cellulose acetate, comprising:
a step (1) of crushing a wood pulp,
a step (2) of bringing the crushed wood pulp into contact with acetic acid to pretreat the wood pulp,
a step (3) of causing the wood pulp to react with acetic anhydride after the pretreatment to acetylate the pulp,
a step (4) of hydrolyzing the cellulose acetate, which is yielded by the acetylation, and
a step (5) of precipitating the cellulose acetate, an acetylation degree of which is adjusted by the hydrolysis,
wherein in the hydrolyzing step (4), in a hydrolysis reaction system, a concentration of oxygen is set to 1% or less.

5. The method for producing a cellulose acetate according to claim 4, wherein in the hydrolyzing step (4), an inert gas is introduced into the hydrolysis reaction system to set the concentration of oxygen in the hydrolysis reaction system to 1% or less.

6. The method for producing a cellulose acetate according to claim 4 or 5, wherein in the acetylating step (3), the oxygen concentration in a reaction system for the acetylation is set to 3% or less.

7. The method for producing a cellulose acetate according to any one of claims 4 to 6, wherein in the acetylating step (3), an inert gas is introduced into the reaction system for the acetylation to set the concentration of oxygen in the reaction system for the acetylation to 3% or less.

8. The method for producing a cellulose acetate according to any one of claims 4 to 7, wherein in the hydrolyzing step (4), the temperature in the hydrolysis reaction system is set to 100°C or higher and 200°C or lower.

9. A device for producing a cellulose acetate, comprising:
a crusher for crushing a wood pulp,
a pretreating unit for bringing the crushed wood pulp into contact with acetic acid to pretreat the wood pulp,
an acetylating reactor for causing the wood pulp to react with acetic anhydride after the pretreatment to acetylate the wood pulp,
a ripening tank for hydrolyzing the cellulose acetate, which is yielded by the acetylation,
a precipitating tank for precipitating the cellulose acetate, the acetylation degree of which is adjusted by the hydrolysis,
a unit for introducing an inert gas into the ripening tank,
a sealing unit for taking away oxygen in the ripening tank to the outside of the ripening tank, but not causing oxygen to flow backward into the ripening tank, and
a pressure adjustor for adjusting the pressure in the ripening tank.

10. The device for producing a cellulose acetate according to claim 9, comprising
a unit for introducing an inert gas into the acetylating reactor,
a sealing unit for taking away oxygen in the acetylating reactor to the outside of the acetylating reactor, but not causing oxygen to flow backward into the acetylating reactor, and
a pressure adjustor for adjusting the pressure in the acetylating reactor.

## Patentansprüche

1. Celluloseacetat, umfassend Xylose, Mannose und Glucose, und besitzend einen Magnesiumgehalt von 5 ppm oder weniger,
wobei
ein Anteil eines Molanteils an Xylose mehr als 0,5 Mol-% und höchstens 1,0 Mol-% der Summe der jeweiligen Molanteile an Xylose, Mannose und Glucose ist,
bei einer Wellenlänge von 430 nm ein Absorptionsfarbton von weniger als 0,60 cm⁻¹ gezeigt wird, und
ein Acetylierungsgrad von 51 % bis 58 %, beides einschließlich, gezeigt wird,
wobei der Absorptionsfarbton wie in der Beschreibung beschrieben gemessen wird.

2. Celluloseacetat, umfassend Xylose, Mannose und Glucose, und besitzend einen Magnesiumgehalt von 5 ppm oder weniger,
wobei
ein Anteil eines Molanteils an Xylose mehr als 1,0 Mol-% und höchstens 5,0 Mol-% der Summe der jeweiligen Molanteile an Xylose, Mannose und Glucose ist,
bei einer Wellenlänge von 430 nm ein Absorptionsfarbton von 0,60 cm⁻¹ oder mehr und weniger als 0,80 cm⁻¹ gezeigt wird, und
ein Acetylierungsgrad von 51 % bis 58 %, beides einschließlich, gezeigt wird,
wobei der Absorptionsfarbton wie in der Beschreibung beschrieben gemessen wird.

3. Celluloseacetat, umfassend Xylose, Mannose und Glucose, und besitzend einen Magnesiumgehalt von 5 ppm oder weniger,
wobei
ein Anteil eines Molanteils an Xylose mehr als 5,0 Mol-% und höchstens 7,0 Mol-% der Summe der jeweiligen Molanteile an Xylose, Mannose und Glucose ist, und
bei einer Wellenlänge von 430 nm ein Absorptionsfarbton von 0,80 cm⁻¹ oder mehr und weniger als 1,8 cm⁻¹ gezeigt wird,
wobei der Absorptionsfarbton wie in der Beschreibung beschrieben gemessen wird.

4. Verfahren zum Herstellen von Celluloseacetat, umfassend:
einen Schritt (1) des Zerkleinerns von Holzzellstoff,
einen Schritt (2) des Inkontaktbringens das zerkleinerten Holzzellstoffs mit Essigsäure zum Vorbehandeln des Holzzellstoffs,
einen Schritt (3) des Reagierens des Holzzellstoffs mit Essigsäureanhydrid nach dem Vorbehandeln zur Acetylierung des Holzzellstoffs,
einen Schritt (4) des Hydrolysierens des durch die Acetylierung gewonnenen Celluloseacetats und
einen Schritt (5) das Ausfällens des Celluloseacetats, dessen Acetylierungsgrad durch die Hydrolyse eingestellt wird,
wobei im Schritt (4) des Hydrolysierens in einem Hydrolysereaktionssystem die Sauerstoffkonzentration auf 1 % oder weniger eingestellt wird.

5. Das Verfahren zum Herstellen von Celluloseacetat nach Anspruch 4, wobei im Schritt (4) des Hydrolysierens ein Inertgas in das Hydrolysereaktionssystem eingeleitet wird, um die Sauerstoffkonzentration im Hydrolysereaktionssystem auf 1 % oder weniger einzustellen.

6. Das Verfahren zum Herstellen von Celluloseacetat nach Anspruch 4 oder 5, wobei im Schritt (3) des Acetylierens die Sauerstoffkonzentration in einem Reaktionssystem für die Acetylierung auf 3 % oder weniger eingestellt wird.

7. Das Verfahren zum Herstellen von Celluloseacetat nach irgendeinem der Ansprüche 4 bis 6, wobei im Schritt (3) des Acetylierens ein Inertgas in das Reaktionssystem für die Acetylierung eingeleitet wird, um die Sauerstoffkonzentration im Reaktionssystem für die Acetylierung auf 3 % oder weniger einzustellen.

8. Das Verfahren zum Herstellen von Celluloseacetat nach irgendeinem der Ansprüche 4 bis 7, wobei im Schritt (4) des Hydrolysierens die Temperatur im Hydrolysereaktionssystem auf 100 °C oder mehr und 200 °C oder weniger eingestellt wird.

9. Vorrichtung zum Herstellen von Celluloseacetat, umfassend:
einen Zerkleinerer zum Zerkleinern von Holzzellstoff,
eine Vorbehandlungseinheit, um den zerkleinerten Holzzellstoff mit Essigsäure in Kontakt zu bringen und den Holzzellstoff vorzubehandeln,
einen Acetylierungsreaktor, um den Holzzellstoff nach der Vorbehandlung mit Essigsäureanhydrid reagieren zu lassen und den Holzzellstoff zu acetylieren,
einen Reifungsbehälter zum Hydrolysieren des durch die Acetylierung gewonnenen Celluloseacetats,
einen Fällbehälter zum Ausfällen des Celluloseacetats, dessen Acetylierungsgrad durch die Hydrolyse eingestellt wird,
eine Einheit zum Einleiten eines Inertgases in den Reifungsbehälter,
eine Dichtungseinheit zum Abführen von Sauerstoff aus dem Reifungsbehälter nach außen, ohne dass Sauerstoff in den Reifungsbehälter zurückströmt, und
einen Druckregler zum Einstellen des Drucks im Reifungsbehälter.

10. Die Vorrichtung zum Herstellen von Celluloseacetat nach Anspruch 9, umfassend
eine Einheit zum Einleiten eines Inertgases in den Acetylierungsreaktor,
eine Dichtungseinheit zum Abführen von Sauerstoff aus dem Acetylierungsreaktor nach außen, ohne dass Sauerstoff in den Acetylierungsreaktor zurückströmt, und
einen Druckregler zum Einstellen des Drucks im Acetylierungsreaktor.

## Revendications

1. Acétate de cellulose comprenant du xylose, du mannose, et du glucose, et ayant une teneur en magnésium de 5 ppm ou moins,
dans lequel
une proportion de la teneur en xylose en mole est de plus de 0,5 % en mole et de 1,0 % ou moins en mole dans la somme des teneurs en mole respectives en xylose, mannose, et glucose,
à une longueur d'onde de 430 nm, une teinte en absorptiométrie de moins de 0,60 cm⁻¹ apparait, et
un degré d'acétylation de 51 % à 58 %, valeurs extrêmes incluses, apparait,
dans lequel la teinte en absorptiométrie est mesurée de la manière décrite dans la description.

2. Acétate de cellulose comprenant du xylose, du mannose, et du glucose, et ayant une teneur en magnésium de 5 ppm ou moins,
dans lequel
une proportion de la teneur en xylose en mole est de plus de 1,0 % en mole et de 5,0 % ou moins en mole dans la somme des teneurs en mole respectives en xylose, mannose, et glucose,
à une longueur d'onde de 430 nm, une teinte en absorptiométrie de 0,60 cm⁻¹ ou plus, et de moins de 0,80 cm⁻¹ apparait, et
un degré d'acétylation de 51 % à 58 %, valeurs extrêmes incluses, apparait,
dans lequel la teinte en absorptiométrie est mesurée de la manière décrite dans la description.

3. Acétate de cellulose comprenant du xylose, du mannose, et du glucose, et ayant une teneur en magnésium de 5 ppm ou moins,
dans lequel
une proportion de la teneur en xylose en mole est de plus de 5,0 % en mole et de 7,0 % ou moins en mole dans la somme des teneurs en mole respectives en xylose, mannose, et glucose, et
à une longueur d'onde de 430 nm, une teinte déterminée par absorptiométrie de 0,80 cm⁻¹ ou plus, et de moins de 1,8 cm⁻¹ s'affiche, et
dans lequel la teinte déterminée par absorptiométrie est mesurée de la manière décrite dans la description.

4. Procédé de production d'un acétate de cellulose, comprenant :
une étape (1) consistant à broyer de la pâte de bois,
une étape (2) consistant à mettre la pâte de bois broyée en contact avec de l'acide acétique pour prétraiter la pâte de bois,
une étape (3) consistant à faire réagir la pâte de bois avec de l'anhydride acétique après le prétraitement pour acétyler la pâte,
une étape (4) consistant à hydrolyser l'acétate de cellulose, qui est obtenu par l'acétylation, et
une étape (5) consistant à précipiter l'acétate de cellulose, dont le degré d'acétylation est ajusté par l'hydrolyse,
dans lequel à l'étape d'hydrolyse (4), dans un système de réaction d'hydrolyse, la concentration d'oxygène est réglée à 1 % ou moins.

5. Procédé de production d'un acétate de cellulose selon la revendication 4, dans lequel à l'étape d'hydrolyse (4), un gaz inerte est introduit dans le système de réaction d'hydrolyse pour régler la concentration d'oxygène dans le système de réaction d'hydrolyse à 1 % ou moins.

6. Procédé de production d'un acétate de cellulose selon la revendication 4 ou 5, dans lequel à l'étape d'acétylation (3), la concentration d'oxygène dans un système de réaction pour l'acétylation est réglée à 3 % ou moins.

7. Procédé de production d'un acétate de cellulose selon l'une quelconque des revendications 4 à 6, dans lequel à l'étape d'acétylation (3), un gaz inerte est introduit dans le système de réaction pour l'acétylation pour régler la concentration d'oxygène dans le système de réaction pour l'acétylation à 3 % ou moins.

8. Procédé de production d'un acétate de cellulose selon l'une quelconque des revendications 4 à 7, dans lequel à l'étape d'hydrolyse (4), la température dans le système de réaction d'hydrolyse est réglée à 100 °C ou plus et 200 °C ou moins.

9. Dispositif de production d'un acétate de cellulose, comprenant :
un concasseur permettant de broyer de la pâte de bois,
une unité de prétraitement permettant de mettre la pâte de bois broyée en contact avec de l'acide acétique pour prétraiter la pâte de bois,
un réacteur d'acétylation permettant de faire réagir la pâte de bois avec de l'anhydride acétique après le prétraitement pour acétyler la pâte de bois,
une cuve de maturation permettant d'hydrolyser l'acétate de cellulose, qui est obtenu par l'acétylation,
une cuve de précipitation permettant de précipiter l'acétate de cellulose, dont le degré d'acétylation est ajusté par l'hydrolyse,
une unité permettant d'introduire un gaz inerte dans la cuve de maturation,
une unité d'étanchéité permettant d'évacuer l'oxygène de la cuve de maturation vers l'extérieur de la cuve de maturation, mais sans laisser l'oxygène refluer dans la cuve de maturation, et
un ajusteur de pression permettant d'ajuster la pression dans la cuve de maturation.

10. Dispositif de production d'un acétate de cellulose selon la revendication 9, comprenant
une unité permettant d'introduire un gaz inerte dans le réacteur d'acétylation,
une unité d'étanchéité permettant d'évacuer l'oxygène du réacteur d'acétylation vers l'extérieur du réacteur d'acétylation, mais sans laisser l'oxygène refluer dans le réacteur d'acétylation, et
un ajusteur de pression permettant d'ajuster la pression dans le réacteur d'acétylation.
